(19) Europäisches Patentamt
European Patent Office
Office européen des brevets

(11) **EP 2 824 904 A1**

(12) **EUROPEAN PATENT APPLICATION**

(43) Date of publication:
**14.01.2015 Bulletin 2015/03**

(51) Int Cl.:
***H04N 1/00*** *(2006.01)*

(21) Application number: **14170485.8**

(22) Date of filing: **29.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.05.2013 KR 20130063096**

(71) Applicant: **Samsung Electronics Co., Ltd Gyeonggi-do 443-742 (KR)**

(72) Inventors:
• **Cho, Sung-Jae**
**443-742 Gyeonggi-do (KR)**
• **Kwon, Hyuk-In**
**443-742 Gyeonggi-do (KR)**

(74) Representative: **Jenkins, Richard Gavin**
**HGF Limited**
**Saviour House**
**9 St Saviourgate**
**York YO1 8NQ (GB)**

(54) **Electronic device for collaboration photographing and method of controlling the same**

(57) A method of controlling a host electronic device collaboratively photographing a subject with one or more guest electronic devices is provided. The method includes forming a session with the one or more guest electronic devices, performing synchronization with the one or more guest electronic devices through the formed session, transmitting a photographing command signal for enabling the one or more guest electronic devices to photograph the subject to the one or more guest electronic devices, photographing the subject, and receiving, from each of the one or more guest electronic devices, a picture generated by photographing the subject in a different direction from a photographing direction of the host electronic device and photographing related information on a state at a photographing time point of each of the one or more guest electronic devices.

FIG.1

EP 2 824 904 A1

**Description**

**BACKGROUND OF THE INVENTION**

1. Field of the Invention

The present disclosure relates to an electronic device for collaboration photographing and a method of controlling the same. More particularly, the present disclosure relates to an electronic device for collaboratively photographing one subject with another electronic device, and a method of controlling the same.

2. Description of the Related Art

Recently, consumption of smart phones and tablet Personal Computers (PCs) rapidly has increased. The smart phone and the tablet PC perform data communication and/or phone communication of a related-art mobile communication terminal. Further, the smart phone and the tablet PC can execute various applications like a related art PC and thus meet a user's demand.
A related-art smart phone and tablet PC includes a camera module which can photograph a subject. A user can control the smart phone and/or the tablet PC to photograph the subject, and accordingly, take a picture of desired scenery or people.
Meanwhile, currently, there is a need to develop a technology for photographing one subject in various directions. A stereoscopic effect of the subject can be created by combining pictures of one subject taken in various directions. However, when the subject is photographed in various directions by one smart phone or tablet PC, a problem may occur if the subject moves. When the subject moves, the stereoscopic effect of one subject cannot be created if time points of the photographing are different.
Alternatively, a plurality of users having an electronic device including the camera module may participate in the photographing of one subject. In this case, one user may instruct another user to photograph the subject at a particular time point and another user may photograph the subject based on the instruction. However, even in the above case, time points of the photographing of a plurality of electronic devices may be different, creating difficulty in performing the photographing in an environment in which a large crowd or much noise exists
Accordingly, there is a need to develop a technology which can synchronize a plurality of electronic devices to perform photographing at the same time.
The above information is presented as background information only to assist with an understanding of the present disclosure. No determination has been made, and no assertion is made, as to whether any of the above might be applicable as prior art with regard to the present disclosure.

**SUMMARY OF THE INVENTION**

Aspects of the present disclosure are to address at least the above-mentioned problem and/or disadvantages and to provide at least the advantages described below. Accordingly, an aspect of the present disclosure is to provide an electronic device for synchronizing a plurality of electronic devices to collaboratively photograph a subject at the same time and a method of controlling the same.
In accordance with an aspect of the present disclosure, a method of controlling a host electronic device collaboratively photographing a subject with at least one guest electronic device is provided. The method includes forming a session with the at least one guest electronic device, performing synchronization with the at least one guest electronic device through the formed session, transmitting a photographing command signal for enabling the at least one guest electronic device to photograph the subject to the one or more guest electronic devices, photographing the subject, and receiving, from each of the at least one guest electronic device, a picture generated by photographing the subject in a different direction from a photographing direction of the host electronic device and photographing related information on a state of a respective one of the at least one guest electronic device at a photographing time point of each of the at least one guest electronic devices.
In accordance with another aspect of the present disclosure, a method of controlling a guest electronic device collaboratively photographing a subject with a host electronic device is provided. The method includes forming a session with the host electronic device, performing synchronization with the host electronic device through the formed session, receiving a photographing command signal for enabling the guest electronic device to photograph the subject from the host electronic device, photographing the subject, collecting photographing related information on a state of the guest electronic device at a photographing time point of the guest electronic device, and transmitting a picture generated by photographing the subject and the photographing related information to the host electronic device.
In accordance with another aspect of the present disclosure, a host electronic device collaboratively photographing a subject with one or more guest electronic devices is provided. The host electronic device includes a network module configured to form a session with the at least one guest electronic device and transmit a photographing command signal for enabling the at least one guest electronic device to photograph the subject to the at least one guest electronic device, a synchronization module configured to perform synchronization with the at least one guest electronic device through the formed session, and a camera module configured to photograph the subject, wherein the network module is configured to receive, from each of the at least one guest electronic device, a picture generated by photographing the subject in a different direction from a photographing direction of the host electronic device and photographing related information on a state of a respective one of the at least one guest electronic device at a photographing time point of each of the at least one guest electronic device.

In accordance with another aspect of the present disclosure, a guest electronic device collaboratively photographing a subject with a host electronic device is provided. The guest electronic device includes a network module configured to form a session with the host electronic device and receives a photographing command signal for enabling the guest electronic device to photograph the subject from the host electronic device, a synchronization module configured to perform synchronization with the host electronic device through the formed session, a camera module configured to photograph the subject, and a sensor module configured to collect photographing related information on a state of the guest electronic device at a photographing time point of the guest electronic device, wherein the network module is configured to transmit a picture generated by photographing the subject and the photographing related information to the host electronic device.

In accordance with another aspect of the present disclosure, a method of controlling a host electronic device collaboratively photographing a subject with at least one guest electronic device is provided. The method includes forming a session with the at least one guest electronic device, performing synchronization with the at least one guest electronic device through the formed session, receiving photographing related information on a state of each of the at least one guest electronic device, estimating a position of the subject based on the received photographing related information, and transmitting a guide signal based on the estimated position of the subject to the host electronic device.

In accordance with another aspect of the present disclosure, a method of controlling a guest electronic device collaboratively photographing a subject with a host electronic device is provided. The method includes forming a session with the host electronic device, performing synchronization with the host electronic device through the formed session, transmitting photographing related information on a state of the guest electronic device to the host electronic device, receiving a guide signal based on an estimated position of the subject from the host electronic device, and displaying a photographing guide based on the received guide signal.

In accordance with another aspect of the present disclosure, a host electronic device collaboratively photographing a subject with at least one guest electronic device is provided. The host electronic device includes a network module configured to form a session with the at least one guest electronic device, a synchronization module configured to perform synchronization with the at least one guest electronic device through the formed session, and a controller configured to, when the network module receives photographing related information on a state of each of the at least one guest electronic device, estimate a position of the subject based on the received photographing related information and transmit a guide signal based on the estimated position of the subject to the host electronic device.

In accordance with another aspect of the present disclosure, a guest electronic device collaboratively photographing a subject with a host electronic device is provided. The guest electronic device includes a network module configured to form a session with the host electronic device, to transmit photographing related information on a state of the guest electronic device to the host electronic device, and to receive a guide signal based on an estimated position of the subject from the host electronic device, a synchronization module configured to perform synchronization with the host electronic device through the formed session, and a touch screen configured to display a photographing guide based on the received guide signal.

Various embodiments of the present disclosure provide an electronic device for synchronizing a plurality of electronic devices to collaboratively photograph a subject at the same time and a method of controlling the same. When the plurality of electronic devices photograph the subject, time points of the photographing of the electronic devices can be controlled to be the same. Accordingly, in an environment where the subject moves, the subject can be photographed in various directions at the same time point. Particularly, even in an environment where a large crowd or much noise exists, the plurality of electronic devices can photograph the subject in various directions at the same time point.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a block diagram schematically illustrating an electronic device according to an embodiment of the present disclosure;

FIG. 2 illustrates a concept describing collaboration photographing of a plurality of electronic devices according to an embodiment of the present disclosure;

FIG. 3A is a flowchart describing a method of controlling a host electronic device according to an embodiment of the present disclosure;

FIG. 3B is a flowchart describing a method of controlling a guest electronic device according to an embodiment of the present disclosure;

FIG. 4 is a flowchart describing a method of forming a session by a host electronic device according to an embodiment of the present disclosure;

FIGS. 5A, 5B, 5C, and 5D illustrate concepts of an electronic device according to various embodiments of the present disclosure;

FIG. 6 illustrates a concept describing synchronization according to an embodiment of the present disclosure;

FIG. 7 illustrates a concept describing synchronization according to another embodiment of the present disclosure;

FIG. 8 is a flowchart describing the generation of a three-dimensional gallery according to an embodiment of the present disclosure;

FIGS. 9A, 9B, 9C, and 9D illustrate concepts describing a screen of an electronic device according to various embodiments of the present disclosure;

FIGS. 10A, 10B, 10C, and 10D are block diagrams describing operations of a host electronic device and guest electronic devices according to various embodiments of the present disclosure;

FIG. 11A is a flowchart describing a method of controlling a host electronic device according to another embodiment of the present disclosure;

FIG. 11B is a flowchart describing a method of controlling a guest electronic device according to another embodiment of the present disclosure;

FIGS. 12A and 12B illustrate concepts describing a method of estimating a subject position according to an embodiment of the present disclosure;

FIGS. 13 and 14 illustrate concepts describing a determination of a subject estimation position when altitudes of a host electronic device and a guest electronic device are different according to another embodiment of the present disclosure;

FIG. 15A illustrates a concept of a photographing guide according to an embodiment of the present disclosure;

FIG. 15B illustrates a detailed concept of a horizontal guide of FIG. 15A according to an embodiment of the present disclosure;

FIG. 16 is a flowchart describing a method of controlling a host electronic device according to an embodiment of the present disclosure;

FIG. 17 is a flowchart describing a method of controlling a host electronic device according to another embodiment of the present disclosure; and

FIG. 18 illustrates a concept of a position map according to an embodiment of the present disclosure.

The same reference numerals are used to represent the same elements throughout the drawings.

## DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms used in this application are for the purpose of describing embodiments and is not intended to be limiting of the disclosure. As used herein, the singular forms are intended to include the plural forms as well, unless the context clearly indicates otherwise. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein have the same meaning as commonly understood by those of skill in the art. Such terms as those defined in a generally used dictionary are to be interpreted to have the meanings equal to the contextual meanings in the relevant field of art, and are not to be interpreted to have ideal or excessively formal meanings unless clearly defined in the present specification. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

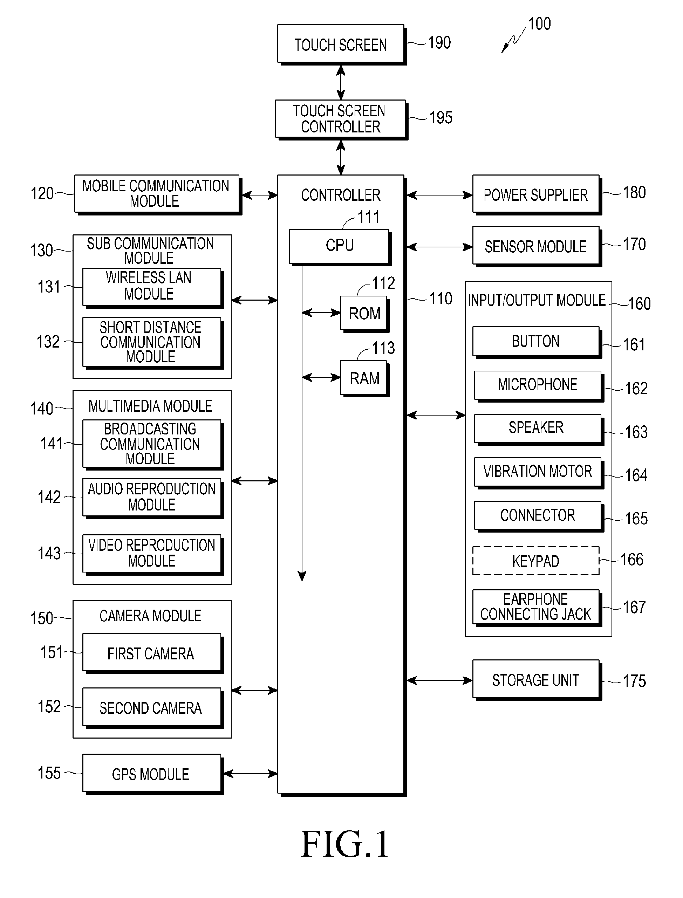

FIG. 1 is a block diagram schematically illustrating an electronic device 100 according to an embodiment of the present disclosure.

Referring to FIG. 1, the electronic device 100 may be connected to an external device (not shown) by using an external device connector, such as a sub communication module 130, a connector 165, and an earphone connecting jack 167.

The external device may include various devices attached to or detached from the electronic device 100 through a cable, such as an earphone, an external speaker, a Universal Serial Bus (USB) memory, a charger, a cradle, a docking station, a Digital Media Broadcast (DMB) antenna, a mobile payment related device, a health management device, such as a blood sugar tester or the like, a game machine, a car navigation device and the like. Further, the external device may include a Bluetooth communication device, a short distance communication device, such as a Near Field Communication (NFC) device, a WiFi Direct communication device, and a wireless Access Point (AP), which may be wirelessly connected to the electronic device 100. In addition, the external device may include another device, a mobile phone, a smart phone, a tablet Personal Computer (PC), a desktop PC, and a server.

The electronic device 100 may be a mobile electronic device 100 as a representative example, and may be a tablet PC, a desktop PC, a smart TeleVision (TV), a notebook, a music player, an Motion Picture Expert Group (MPEG) Audio Layer 3 (MP3) player or the like.

Referring to FIG. 1, the electronic device 100 includes a touch screen 190 and a touch screen controller 195. Also, the electronic device 100 includes a controller 110, a mobile communication module 120, the sub communication module 130, a multimedia module 140, a camera module 150, a Global Positioning System (GPS) module 155, an input/output module 160, a sensor module 170, a storage unit 175, and a power supplier 180.

The sub communication module 130 includes at least one of a wireless Local Area Network (LAN) module 131 and a short distance communication module 132, and the multimedia module 140 includes at least one of a broadcasting communication module 141, an audio reproduction module 142, and a video reproduction module 143.

The camera module 150 includes at least one of a first camera 151 and a second camera 152. The input/output module 160 includes at least one of a button 161, a microphone 162, a speaker 163, a vibration motor 164, the connector 165, a keypad 166, and the earphone connecting jack 167.

The controller 110 may include a Central Processing Unit (CPU) 111, a Read Only Memory (ROM) 112 storing a control program for controlling the electronic device 100, and a Random Access Memory (RAM) 113 used as a storage area for storing a signal and/or data input from the outside of the electronic device 100 and/or for work performed in the electronic device 100. The CPU 111 may include a single core, a dual core, a triple core, a quadruple core, or any suitable number of cores. The CPU 111, the ROM 112 and the RAM 113 may be connected with each other through internal buses (not shown).

The controller 110 may control the mobile communication module 120, the sub communication module 130, the multimedia module 140, the camera module 150, the GPS module 155, the input/output module 160, the sensor module 170, the storage unit 175, the power supplier 180, the touch screen 190, the touch screen controller 195, and any other element included in and/or connected to the electronic device 100.

The mobile communication module 120 connects the electronic device 100 with the external device through mobile communication by using at least one antenna (not shown) according to a control of the controller 110. The mobile communication module 120 transmits and/or receives a wireless signal for a voice call, a video call, a Short Message Service (SMS), a Multimedia Message Service (MMS), and any other similar and/or suitable function to/from a mobile phone (not shown), a smart phone (not shown), a tablet PC, or another device (not shown) having a phone number input into the electronic device 100.

The sub communication module 130 may include at least one of the wireless LAN module 131 and the short distance communication module 132. For example, the sub communication module 130 may include only the wireless LAN module 131, only the short distance communication module 132, or both the wireless LAN module 131 and the short distance communication module 132.

The wireless LAN module 131 may be connected to the Internet in a place where a wireless Access Point (AP) (not shown) is installed according to a control of the controller 110. The wireless LAN module 131 supports a wireless LAN standard, such as standards of the Institute of Electrical and Electronics Engineers (IEEE), such as IEEE 802.11x. The short distance communication module 132 may wirelessly perform short distance communication between the electronic device 100 and an image forming apparatus (not shown) according to a control of the controller 110. A short distance communication scheme may include Bluetooth, Infrared Data Association (IrDA) communication, WiFi-Direct communication, Near Field Communication (NFC) and the like.

The electronic device 100 may include at least one of the mobile communication module 120, the wireless LAN module 131, and the short distance communication module 132. For example, the electronic device 100 may include a combination of the mobile communication module 120, the wireless LAN module 131, and the short distance communication module 132 according to a capability of the electronic device 100.

The multimedia module 140 may include the broadcasting communication module 141, the audio reproduction module 142 and the video reproduction module 143. The broadcasting communication module 141 can receive a broadcasting signal, for example, a TV broadcasting signal, a radio broadcasting signal, or a data broadcasting signal, and broadcasting supplement information, for example, an Electric Program Guide (EPG) and/or an Electric Service Guide (ESG), output from a broadcasting station through a broadcasting communication antenna (not shown) according to a control of the controller 110.

The audio reproduction module 142 may reproduce a digital audio file, for example, a file having a file extension of mp3, wma, ogg, or wav, stored and/or received according to a control of the controller 110. The video reproduction module 143 may reproduce a stored and/or received digital moving image file, e.g., a file of which the file extension is mpeg, mpg, mp4, avi, mov, or mkv, according to a control of the controller 110. The video reproduction module 143 may reproduce a digital audio file.

The multimedia module 140 may include the audio reproduction module 142 and the video reproduction module 143, except for the broadcasting communication module 141. Further, the audio reproduction module 142 and/or the video reproduction module 143 of the multimedia module 140 may be included in the controller 110.

The camera module 150 may include at least one of the first camera 151 and the second camera 152, each of which photographs a still image and/or a video according to a control of the controller 110. Further, the first camera 151 and/or the second camera 152 may include an auxiliary light source, for example, a flash (not shown, providing light used for the photographing. The first camera 151 may be disposed on a front surface of the electronic device 100 and the second camera 152 may be disposed on a rear surface of the electronic device 100. In a different way, the first camera 151 and the second camera 152 may be disposed to be adjacent to each other, for example, an interval between the first camera 151 and the second camera 152 is larger than 1 cm or smaller than 8 cm, and thus a three-dimensional still image or a three-dimensional video may be photographed.

The GPS module 155 may receive radio waves from a plurality of GPS satellites (not shown) in Earth's orbit and calculate a position of the electronic device 100 by using Time of Arrival from the GPS satellites to the electronic device 100.

The input/output module 160 may include at least one of the button 161, the microphone 162, the speaker 163, the vibration motor 164, the connector 165, and the keypad 166.

The button 161 may be formed on a front surface, a side surface, and/or a rear surface of a housing of the electronic device 100, and may include at least one of a power/lock button, a volume button, a menu button, a home button, a back button, and a search button.

The microphone 162 receives a voice and/or a sound to generate an electrical signal according to a control of the controller 110.

The speaker 163 may output sounds corresponding to various signals, for example, a wireless signal, a broadcasting signal, a digital audio file, a digital video file, taking a picture or the like, of the mobile communication module 120, the sub communication module 130, the multimedia module 140, and/or the camera module 150 to the outside of the electronic device 100 according to a control of the controller 110. The speaker 163 may output a sound, for example, a button tone corresponding to a phone call and/or a ringing tone, corresponding to a function performed by the electronic device 100. At least one of the speaker 163 may be formed on a proper position and/or positions of the housing of the electronic device 100.

The vibration motor 164 may convert an electronic signal to mechanical vibration according to a control of the controller 110. For example, when the electronic device 100 in a vibration mode receives a voice call from another device (not shown), a vibration motor is operated. At least one of the vibration motor 164 may be formed within the housing of the electronic device 100. The vibration motor 164 may operate in response to a touch action of the user on the touch screen 190 and/or successive motions of the touch on the touch screen 190.

The connector 165 may be used as an interface for connecting the electronic device 100 and an external device and/or the electronic device 100 and a power source (not shown). The external device may be a docking station, and the data may be an input signal transmitted from an external input device, for example, a mouse, a keyboard or the like. The electronic device 100 may transmit and/or receive data stored in the storage unit 175 of the electronic device 100 to and/or from the external device through a wired cable connected to the connector 165 according to a control of the controller 110. Further, the electronic device 100 may receive power from the power source through the wired cable connected to the connector 165 and/or charge a battery (not shown) by using the power source.

The keypad 166 may receive a key input from the user for the control of the electronic device 100. The keypad 166 may include a physical keypad (not shown) formed in the electronic device 100 and/or a virtual keypad (not shown) displayed on the touch screen 190. The physical keypad formed in the electronic device 100 may be excluded according to a capability and/or structure of the electronic device 100.

An earphone (not shown) may be inserted into the earphone connecting jack 167 to be connected with the electronic device 100.

The sensor module 170 includes at least one sensor for detecting a state of the electronic device 100. For example, the sensor module 170 may include a proximity sensor (not shown) for detecting whether the user approaches the electronic device 100 and an illumination sensor (not shown) for detecting an amount of ambient light of the electronic device 100.

Further, the sensor module 170 may include a gyro sensor (not shown). The gyro sensor may detect the operation of the electronic device 100, e.g., a rotation of the electronic device 100, and/or an acceleration and/or vibration applied to the electronic device 100, may detect a point of the compass using the magnetic field on Earth, or may detect a gravity acting direction. Further, the sensor module 170 may include an altimeter (not shown) for measuring an atmospheric pressure to detect an altitude. At least one sensor may detect the state, generate a signal corresponding to the detection, and transmit the generated signal to the controller 110. The sensors of the sensor module 170 may be added or omitted according to the capability of the electronic device 100.

The storage unit 175 may store signals and/or data input/output in response to the operations of the mobile communication module 120, the sub communication module 130, the multimedia module 140, the camera module 150, the GPS module 155, the input/output module 160, the sensor module 170, and the touch screen 190 according to a control of the controller 110. The storage unit 175 may store a control program and applications for controlling the electronic device 100 and/or the controller 110.

The term storage unit includes the storage unit 175, the ROM 112 and the RAM 113 within the controller 110, and/or a memory card (not shown), for example, an SD card and/or a memory stick, installed in the electronic device 100. The storage unit may include a non-volatile memory, a volatile memory, a Hard Disc Drive (HDD), and a Solid State Drive (SSD).

The power supplier 180 may supply power to at least one battery disposed in the housing of the electronic device 100 according to a control of the controller 110. The at least one supply power to the electronic device 100. Further, the power supplier 180 may supply power input from an external power source (not shown) through a wired cable connected to the connector 165 to the electronic device 100. In addition, the power supplier 180 may supply power wirelessly input from the external power source through a wireless charging technology to the electronic device 100.

The touch screen 190 may provide user interfaces corresponding to various services, for example, a call, data transmission, broadcasting, and photography, to the user. The touch screen 190 may transmit an analog signal corresponding to at least one touch input into the user interface to the touch screen controller 195. The touch screen 190 may receive at least one touch through a body of the user, for example, fingers including a thumb, and/or a touchable input means. Also, the touch screen 190 may receive a continuous motion of one touch from among at least one touch. The touch screen 190 may transmit an analog signal corresponding to the continuous movement of the touch input thereto to the touch screen controller 195.

In the present disclosure, the touch is not limited to a contact between the touch screen 190 and the user's body and/or a touchable input device and may include a non-contact touch in which the user's body and/or the touchable input device performs a touch gesture without contacting the touch screen 190. The detectable interval of the touch screen 190 may be changed according to a capability and/or structure of the electronic device 100.

The touch screen 190 may be implemented in, for example, a resistive type, a capacitive type, an Electronic Magnetic Resonance (EMR) type, an infrared type, an acoustic wave type, and/or a combination thereof.

The touch screen controller 195 converts the analog signal received from the touch screen 190 into a digital signal, for example, X and Y coordinates, and transmits the digital signal to the controller 110. The controller 110 may control the touch screen 190 by using the digital signal received from the touch screen controller 195. For example, the controller 110 may cause a shortcut icon (not illustrated) displayed on the touch screen 190 to be selected and/or may execute the shortcut icon in response to a touch. Further, the touch screen controller 195 may be included in the controller 110

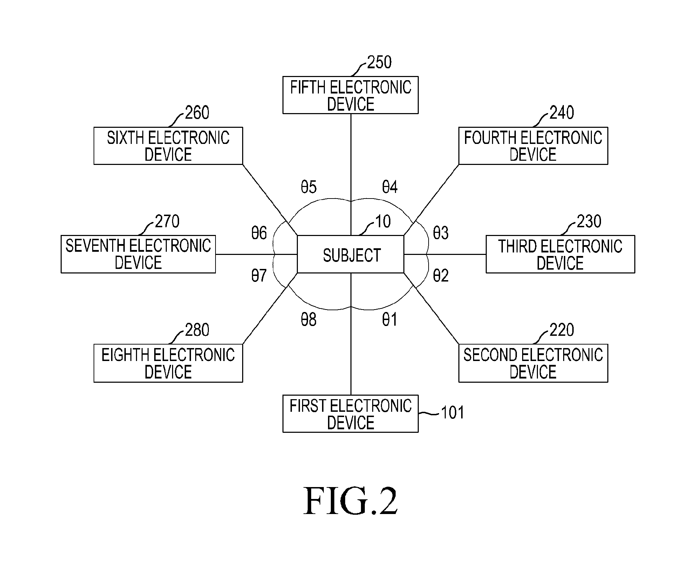

FIG. 2 illustrates a concept describing collaboration photographing of a plurality of electronic devices according to an embodiment of the present disclosure.

Referring to FIG. 2, the electronic device 100, as described in FIG. 1, may also be referred to as a first electronic device 100, as shown in FIG. 2. Also, second through eight electronic devices 220 to a280 may be substantially the same as the electronic device 100 as described in FIG. 1. Each of the first electronic device 100 to the eighth electronic device 280 may be implemented in various forms, such as a smart phone, a Personal Digital Assistant (PDA), tablet PC, a digital camera, and the like.

As illustrated in FIG. 2, the first electronic device 100 to the eighth electronic device 280 may photograph a subject 10. An angle formed by the first electronic device 100, the subject 10, and the second electronic device 220 may be θ1. An angle formed by the second electronic device 220, the subject 10, and the third electronic device 230 may be θ2. An angle formed by the third electronic device 230, the subject 10, and the fourth electronic device 240 may be θ3. An angle formed by the fourth electronic device 240, the subject 10, and the fifth electronic device 250 may be θ4. An angle formed by the fifth electronic device 250, the subject 10, and the sixth electronic device 260 may be θ5. An angle formed by the sixth electronic device 260, the subject 10, and the seventh electronic device 270 may be θ6. An angle formed by the seventh electronic device 270, the subject 10, and the eighth electronic device 280 may be θ7. An angle formed by the eighth electronic device 280, the subject 10, and the first electronic device 100 may be θ8. θ1 to θ8 may be different from, partially the same, or the same as each other.

Distances between the subject 10 and the first electronic device 100 to the eighth electronic device 280 may be d1 to d8, respectively, and d1 to d8 may be different from, partially the same, or the same as each other.

As described above, the first electronic device 100 to the eighth electronic device 280 may photograph the subject 10 in and/or from various directions. The first electronic device 100 may receive a picture taken by each of the second electronic device 220 to the eighth electronic device 280. The first electronic device 100 may generate a three-dimensional gallery by combining the taken picture and the received pictures. The three-dimensional gallery will be described below in more detail. An electronic device that first receives pictures from other electronic devices and generates a three-dimensional gallery may be referred to as a host electronic device.

The second electronic device 220 to the eighth electronic device 280 that photograph the subject 10 according to a control of the host electronic device and transmit taken pictures to the host electronic device may be referred to as guest electronic devices.

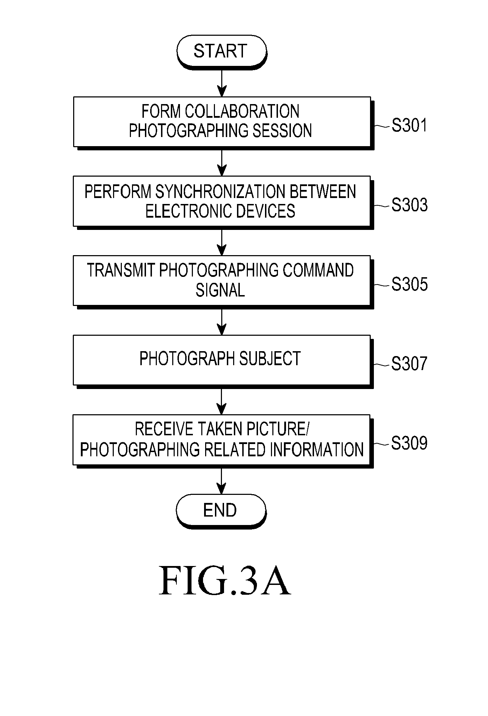

FIG. 3A is a flowchart describing a method of controlling a host electronic device according to an embodiment of the present disclosure.

The electronic device 100, which may also be referred to as a host electronic device 100, may form a collaboration photographing session with the guest electronic devices 220 to 280 in operation S301. For example, each of the host electronic device 100 and the guest electronic devices 220 to 280 may store and execute an application for the collaboration photographing. The host electronic device 100 and the guest electronic devices 220 to 280 may execute the application to form the collaboration photographing session for signal transmission and/or reception related to the collaboration photographing.

As described above, the host electronic device 100 and the guest electronic devices 220 to 280 may transmit/receive a signal based on various communication standards, such as the wireless LAN standard IEEE 802.11x, Bluetooth, IrDA communication, WiFi-Direct communication, NFC, and the like. A collaboration photographing application may be designed to transmit and/or receive a signal based on the aforementioned various communication standards.

The host electronic device 100 and the guest electronic devices 220 to 280 may form a session based on a communication standard. For example, there is a case in which the host electronic device 100 and the guest electronic devices 220 to 280 are preset to transmit and/or receive a signal based on Bluetooth Low Energy (BLE). In this case, the host electronic device 100 may receive an advertisement signal from the guest electronic devices 220 to 280 and transmit a response signal. Further, the host electronic device 100 may receive a network join signal from the guest electronic devices 220 to 280 and transmit a response signal, so as to form a session.

Meanwhile, forming of the session based on the BLE is merely an example, and an authentication process may be further included. It may be easily understood by those skilled in the art that the host electronic device 100 and the guest electronic devices 220 to 280 may form the session in a scheme defined by a communication standard even when the electronic devices are based on other various communication standards. It is obvious that the scope of the present disclosure is not limited by the communication standard.

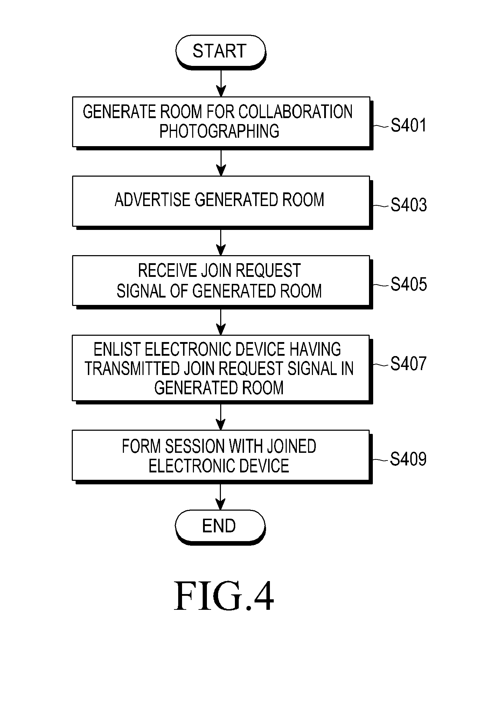

Meanwhile, a session forming method according to another embodiment of the present disclosure will be described in more detail with reference to FIG. 4.

Referring back to FIG. 3A, the host electronic device 100 and the guest electronic devices 220 to 280 may perform synchronization in operation S303. The synchronization may refer to time synchronization of the host electronic device 100 and the guest electronic devices 220 to 280.

Further, during the synchronization, the host electronic device 100 may enter a state where the host electronic device 100 can perform the photographing and transmit a photographing command signal. In addition, during the synchronization, the guest electronic devices 220 to 280 may enter a state where the guest electronic devices 220 to 280 can perform the photographing through the camera module when receiving a photographing command signal from the host electronic device 100.

The host electronic device 100 may transmit a photographing command signal to the guest electronic devices 220 to 280 in operation S305. The photographing command signal may be a signal instructing the guest electronic devices 220 to 280 to photograph the subject 10. The photographing command signal may include an intent of the photographing command.

Alternatively, the photographing command signal may further include information on a photographing time point. For example, the photographing command signal may include information for performing the photographing at a particular time point in order to prevent a difference between photographing time points of the host electronic device 100 and the guest electronic devices 220 to 280 by a time needed for the photographing command signal reception and signal processing.

The host electronic device 100 may photograph the subject 10 in operation 307. The host electronic device 100 may photograph the subject 10 after transmitting the photographing command signal, and/or may photograph the subject 10 at the particular time point included in the photographing command signal. The guest electronic devices 220 to 280 may photograph the subject 10 based on the received photographing command signal. The guest electronic devices 220 to 280 may also photograph the subject 10 when receiving the photographing command signal, and/or may photograph the subject 10 at the particular time point included in the photographing command signal.

The host electronic device 100 may receive taken pictures from the guest electronic devices 220 to 280 and also receive photographing related information in operation S309. The photographing related information may be information on a state of a respective electronic device at a photographing time point of each of the guest electronic devices 220 to 280.

More specifically, the photographing related information may include at least one of a position of each of the guest electronic devices 220 to 280, a direction, and an inclination when the photographing is performed. For example, when the pictures are based on the MPEG standard, the photographing related information may be included in picture data as metadata. Alternatively, the photographing related information may be independently processed from the picture data and transmitted to the host electronic device 100.

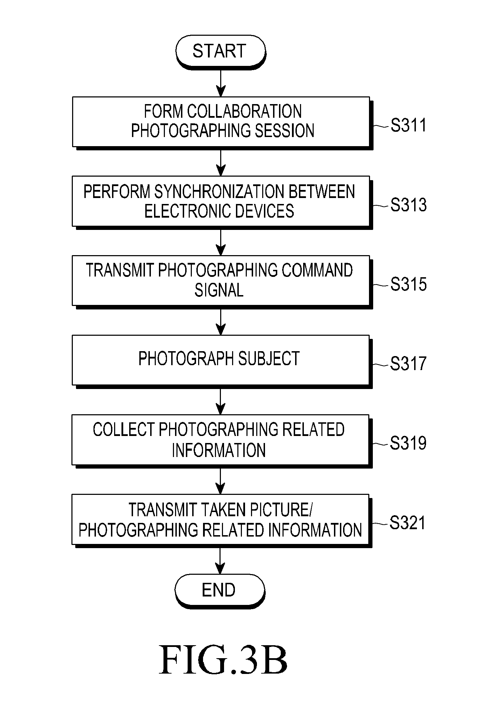

FIG. 3B is a flowchart describing a method of controlling a guest electronic devices according to an embodiment of the present disclosure.

Referring to FIG. 3B, the guest electronic devices 220 to 280 may form collaboration photographing sessions with the host electronic device 100 in operation S311 and perform synchronization in operation S313. As described above, the synchronization may include at least one of time synchronization between the host electronic device 100 and the guest electronic devices 220 to 280 and entering a mode in which photographing is performed when the photographing command signal is received.

The host electronic device 100 may transmit the photographing command signal to the guest electronic devices 220 to 280 in operation S315. The photographing command signal may include at least one of the intent to perform the photographing by driving the camera module and information on the photographing time point. The guest electronic devices 220 to 280 may output a vibration and/or sound having the intent to initiate the photographing when the photographing command signal is received.

The guest electronic devices 220 to 280 may photograph the subject 10 based on the photographing command signal in operation S317. The guest electronic devices 220 to 280 may photograph the subject 10 in a different direction and/or respective different directions from a photographing direction of the host electronic device 100.

The guest electronic devices 220 to 280 may collect photographing related information in operation S319. The photographing related information may include at least one of a position, a direction, and an inclination of each of the guest electronic devices 220 to 280 when the photographing is performed. Each of the guest electronic devices 220 to 280 may collect a GPS coordinate measured by respective GPS modules. Each of the guest electronic devices 220 to 280 may measure an altitude of each of the guest electronic devices 220 to 280 measured by respective altimeters. Each of the guest electronic devices 220 to 280 may collect at least one of the direction and the inclination measured by respective gyro sensors.

The guest electronic devices 220 to 280 may transmit at least one of the taken pictures and the collected photographing related information to the host electronic device 100 in operation S321.

According to the above described process, the host electronic device 100 may receive at least one of the taken pictures and the collected photographing related information from the guest electronic devices 220 to 280. The host electronic device 100 may generate a three-dimensional gallery based on at least one of the received taken pictures and collected photographing related information, which will be described below in more detail.

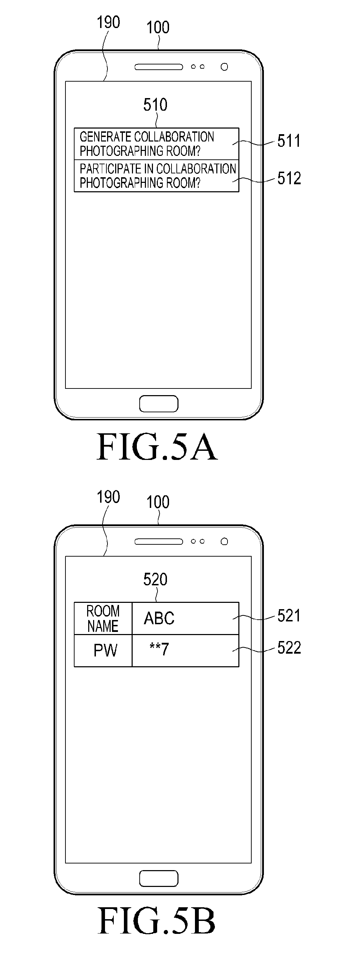

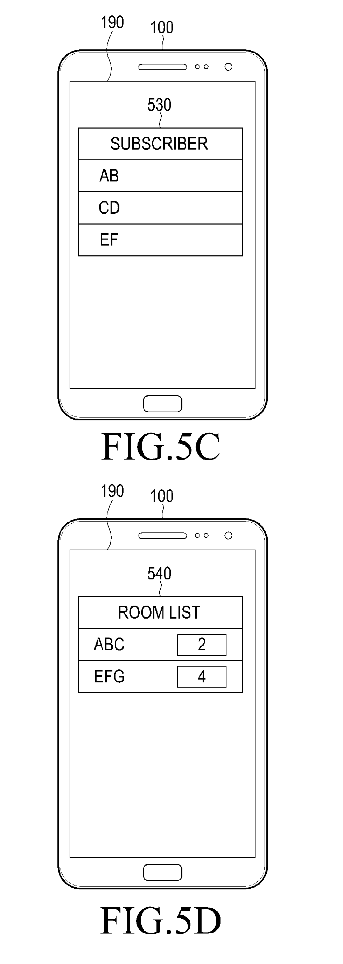

FIG. 4 is a flowchart describing a method of forming a session by a host electronic device according to an embodiment of the present disclosure, and FIGS. 5A, 5B, 5C, and 5D illustrate concepts of an electronic device according to various embodiments of the present disclosure.

Referring to FIG. 4, the embodiment of FIG. 4 will be described in more detail with reference to FIGS. 5A to 5D, and FIGS. 5A to 5D illustrate concepts of the electronic device according to various embodiments of the present disclosure.

The host electronic device 100 may generate a room for collaboration photographing in operation S401. For example, the host electronic device 100 may operate an Internet Protocol (IP) Multimedia Subsystem (IMS) core system.

The IMS core system enables the room generation for the collaboration photographing, the participation in the room for the collaboration photographing, and the signal transmission and/or reception. The host electronic device 100 may display an application execution screen, for example, a screen, as illustrated in FIG. 5A.

The host electronic device 100 may display a selection window 510 including a collaboration photographing room generation icon 511 and a collaboration photographing room participation icon 512. When the collaboration photographing room generation icon 511 is selected, the host electronic device 100 may generate the room for the collaboration photographing. The room for the collaboration photographing may maintain a session between electronic devices participating in the collaboration photographing. The room for the collaboration photographing may manage an electronic device list participating in the collaboration photographing and signals are transmitted and/or received between the participating electronic devices in the room.

For example, as illustrated in FIG. 5B, the host electronic device 100 may display an input window 520 including at least one of a collaboration photographing room name input window 521 and a password input window 522. The host electronic device 100 may generate the collaboration photographing room based on collaboration photographing room information input into the input window 520. FIG. 5C illustrates a UI concept of the generated room according to an embodiment of the present disclosure and includes a subscriber list 530.

The host electronic device 100 may provide an advertisement of the generated room to other electronic devices in operation S403. For example, the host electronic device 100 may broadcast and/or multicast an advertisement signal including information on the generated room to other electronic devices.

The guest electronic devices 220 to 280 having received the advertisement signal may display a generated room list 540 based on the received advertisement signal as illustrated in FIG. 5D. When the collaboration photographing room participation icon 512 is selected, the generated room list 540 may be displayed.

The guest electronic devices 220 to 280 having received the advertisement signal may join the generated room. For example, the host electronic device 100 may receive a join request signal form at least one of the guest electronic devices 220 to 280 in operation S405. The host electronic device 100 may enlist the electronic devices having transmitted the join request signal in the generated room in operation S407.

The host electronic device 100 may form sessions with the guest electronic devices 220 to 280 having joined the room in operation S409. The host electronic device 100 may transmit and/or receive a signal to/from the guest electronic devices 220 to 280 having formed the session. For example, the host electronic device 100 and the guest electronic devices 220 to 280 may transmit and/or receive the photographing command signal, the taken pictures, the photographing related information, and the like.

Meanwhile, although it has been described that the host electronic device 100 and the guest electronic devices 220 to 280 directly transmit and/or receive the signal, there may be a proxy server that relays the signal between the host electronic device 100 and the guest electronic devices 220 to 280. In this case, the proxy server may include the IMS core system and relay the transmitted and/or received signal between the host electronic device 100 and the guest electronic devices 220 to 280. When the proxy server includes the IMS core system, the proxy server may perform a Session Initiation Protocol (SIP) based multimedia session control, manage the generated collaboration photographing room, and/or manage joining and withdrawal from the collaboration photographing room.

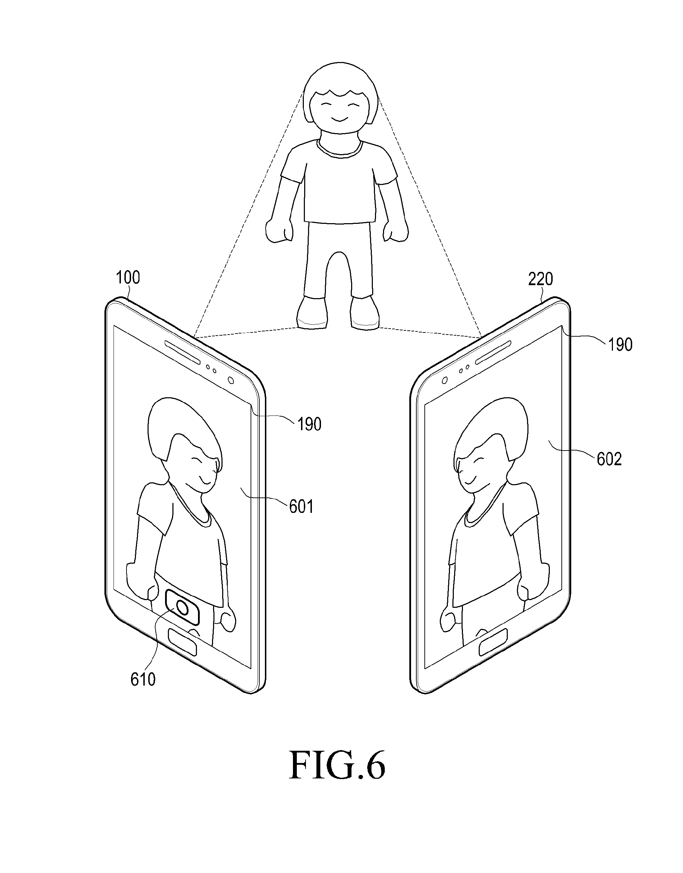

FIG. 6 illustrates a concept describing synchronization according to an embodiment of the present disclosure.

As described above, the synchronization may be such that the host electronic device 100 enters a state where the host electronic device 100 can transmit the photographing command signal to photograph the subject and the guest electronic device 220 enters to a state where the guest electronic device 220 can receive the photographing command signal to photograph the subject.

As illustrated in FIG. 6, the host electronic device 100 and the guest electronic device 220 may collect images of the subject in different directions. A first picture 601 of the subject in a first direction and a photographing button 610 may be displayed on the touch screen 190 of the host electronic device 100. Further, a second picture 602 of the subject in a second direction may be displayed on a touch screen 221 of the guest electronic device 220.

When the photographing button 610 is selected, the host electronic device 100 may transmit the photographing command signal to the guest electronic device 220 and take the first picture 601. Then, the guest electronic device 220 may receive the photographing command signal and take the second picture 602.

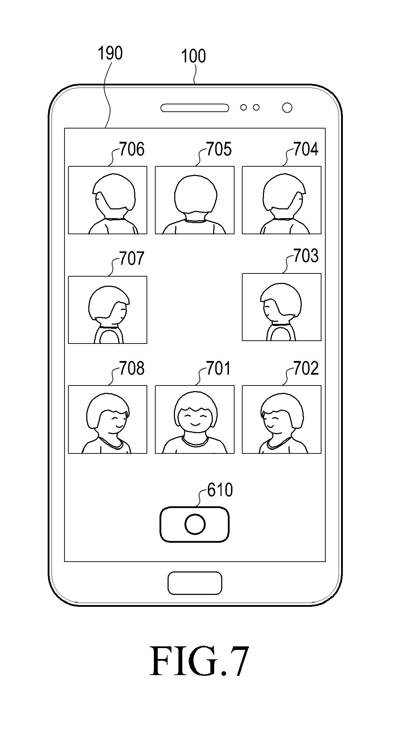

FIG. 7 illustrates a concept describing synchronization according to another embodiment of the present disclosure.

As illustrated in FIG. 7, the host electronic device 100 may display in real time, on the touch screen 190, pictures 702 to 708 which are being taken by the guest electronic devices 220 to 280. The host electronic device 100 may further display a picture 701 which is being taken by the host electronic device 100. That is, the user of the host electronic device 100 may identify in real time the pictures taken by the guest electronic devices 220 to 280 as well as the picture taken by the host electronic device 100, and accordingly, control the host electronic device 100 to transmit the photographing command signal at a desired time point.

Meanwhile, in the embodiment of FIG. 7, when the sessions are formed, the guest electronic devices 220 to 280 may transmit the taken pictures to the host electronic device 100.

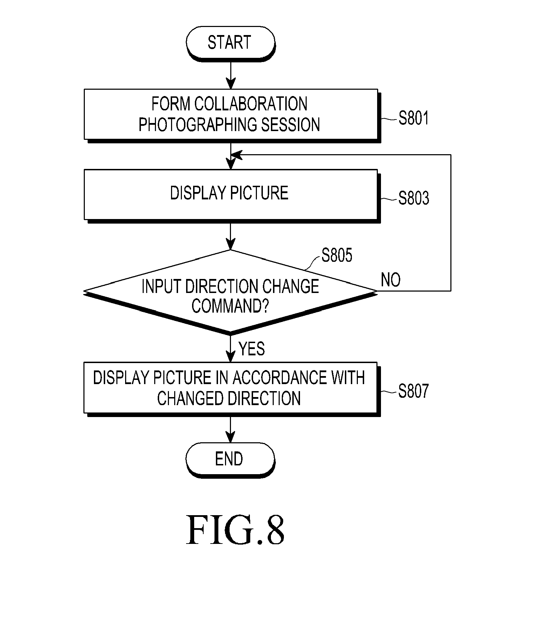

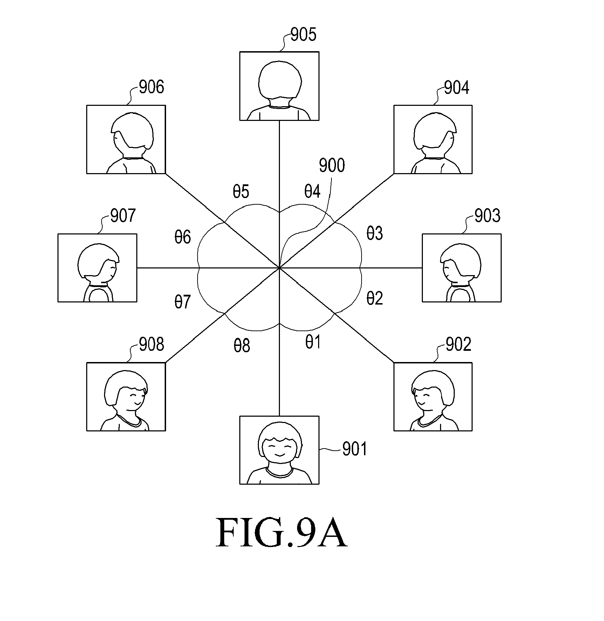

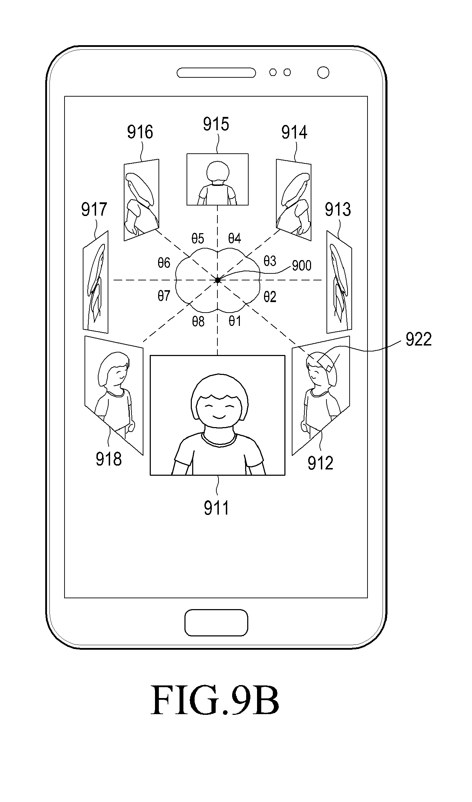

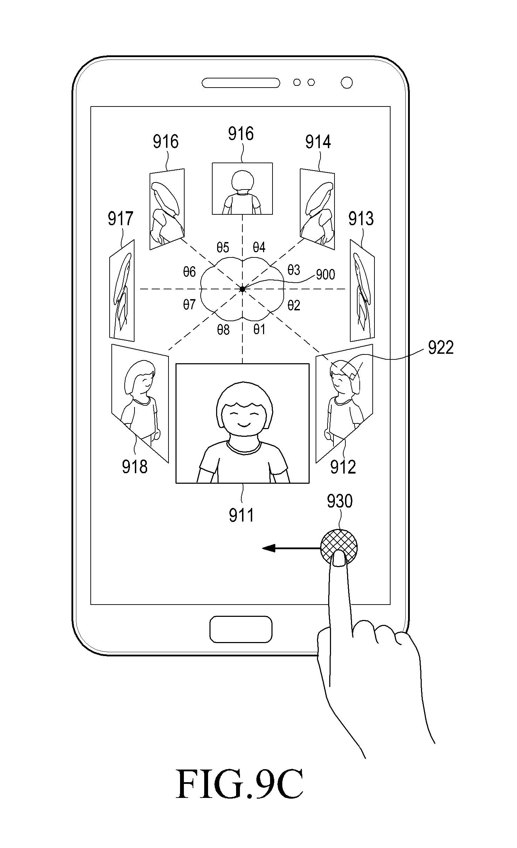

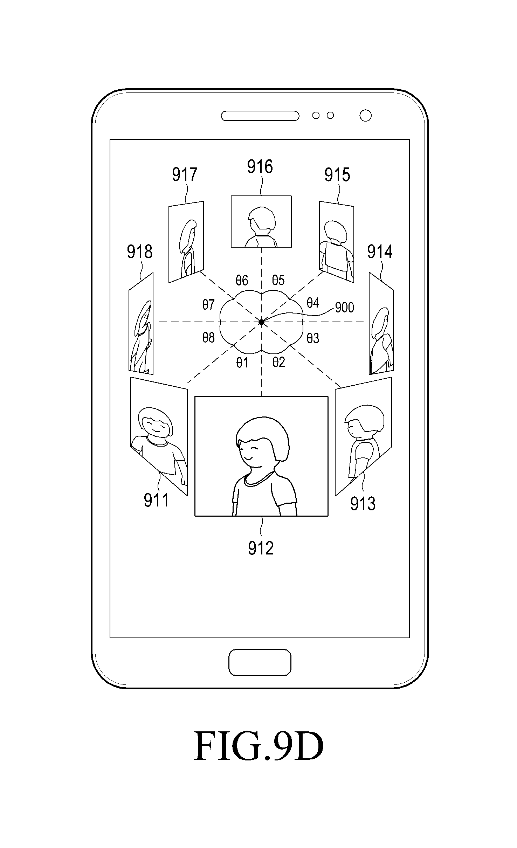

FIG. 8 is a flowchart describing generation of a three-dimensional gallery according to an embodiment of the present disclosure, and FIGS. 9A, 9B, 9C, and 9D illustrate concepts describing a screen of an electronic device according to various embodiments of the present disclosure.

Referring to FIGS. 8 and 9A to 9D, it is assumed that the host electronic device 100 may receive at least one of the taken pictures and the photographing related information from the guest electronic devices 220 to 280

The host electronic device 100 may form a collaboration photographing session and may determine picture arrangement positions based on the photographing related information in operation S801. As described above, the photographing related information may include at least one of the position, the direction, and the inclination of each of the guest electronic devices 220 to 280.

The host electronic device 100 may determine the picture arrangement positions in accordance with positions where the guest electronic devices 220 to 280 are located. Further, the host electronic device 100 may determine picture arrangement angles based on at least one of the position, the direction, and the inclination of each of the guest electronic devices 220 to 280. For example, the host electronic device 100 may determine arrangement positions of pictures 901 to 908 in accordance with arrangement positions of the guest electronic devices 220 to 280 as illustrated in FIG. 9A. For example, the host electronic device 100 may determine positions of the guest electronic devices 220 to 280 based on the photographing related information received from the guest electronic devices 220 to 280 as illustrated in FIG. 2.

The host electronic device 100 may determine the positions of the guest electronic devices 220 to 280 to be arrangement positions of the corresponding pictures 902 to 908. Further, the host electronic device 100 may arrange the picture 901 in front of a subject estimation position 900. The picture 901 may be located in a direction of an angle reference line extended from the subject estimation position 900. Meanwhile, the host electronic device 100 may determine an arrangement position of the picture 902 as a position having $\theta1$ from the angle reference line.

The host electronic device 100 may display the picture on the determined arrangement position in operation S803. When the picture is displayed on the determined arrangement position, the host electronic device 100 may generate and display a three-dimensional gallery such that it appears that the picture is arranged in a three-dimension space. For example, the host electronic device 100 may display two-dimensionally first picture 911 to eighth picture 918 such that the pictures 911 to 918 are arranged in a three-dimensional space, as shown in FIG. 9B. Particularly, the host electronic device 100 may determine and display inclinations of the second picture 912 to the eighth picture 918 based on at least one of a respective direction, inclination, and/or relative azimuth received from the second to eighth electronic devices 220 to 280.

The host electronic device 100 may display the second picture 912 such that a normal line 922 from the surface of the second picture 912 faces a subject estimation position 900, and it may be equally applied to the third picture 912 through the eighth picture 918.

Meanwhile, although it has been disclosed in the above described embodiment that the host electronic device 100 determines the arrangement positions of the pictures based on relative azimuth, it merely corresponds to an example. The host electronic device 100 may also determine the arrangement position of at least one pictures based on absolute azimuth direction of the at least one guest electronic device. For example, the host electronic device 100 may receive absolute azimuth information from the at least one guest electronic device and determine the arrangement position of at least one picture based on the received absolute azimuth direction.

Alternatively, the host electronic device 100 may receive absolute azimuth information from the at least one guest electronic device and derive relative azimuth based on received absolute azimuth direction so as to determine the arrangement position of at least one picture.

Referring back to FIG. 8, the host electronic device 100 determines whether a direction change command is inputted in operation S805. For example, as illustrated in FIG. 9C, the direction change command may be a left drag gesture 930 input into the touch screen 190 of the host electronic device 100. The direction change command may be a command of changing viewing directions of the pictures included in the three-dimensional gallery.

When the host electronic device 100 determines that the direction change command is input in operation S805, the host electronic device 100 may display a picture in accordance with the changed direction in operation S807. For example, as illustrated in FIG. 9D, the host electronic device 100 may display the second picture 912 in front of the host electronic device 100 and adjust and display the remaining pictures.

Meanwhile, the left drag gesture described as the direction change command is merely an example, and it may be easily understood by those skilled in the art that the scope of the present disclosure is not limited by the example of the direction change command.

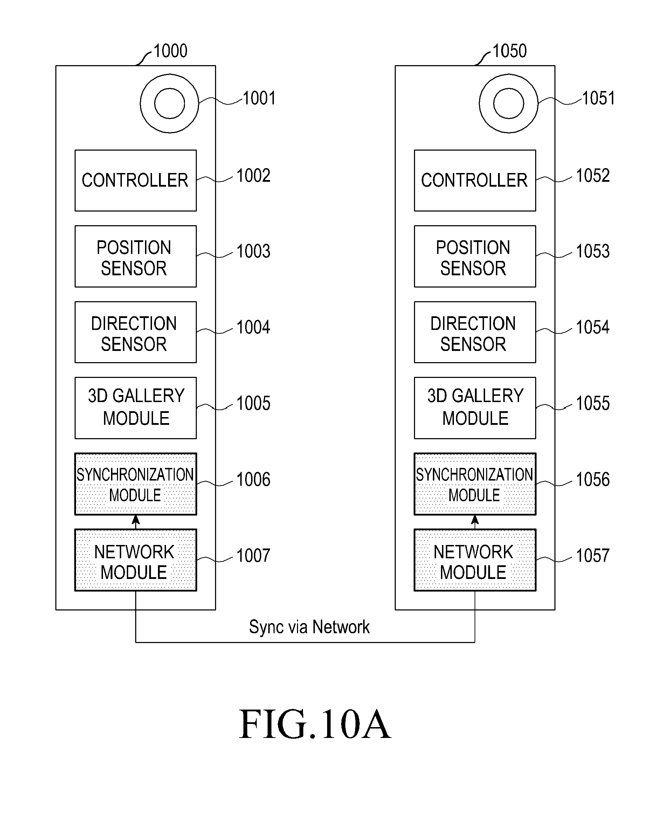

FIGS. 10A to 10D are block diagrams describing operations of a host electronic device and a guest electronic device according to various embodiments of the present disclosure.

Referring to FIG. 10A, a host electronic device 1000 may include a camera module 1001, a controller 1002, a position sensor 1003, a direction sensor 1004, a three-dimensional gallery module 1005, a synchronization module 1006, and a network module 1007. Further, a guest electronic device 1050 may include a camera module 1051, a controller 1052, a position sensor 1053, a direction sensor 1054, a three-dimensional gallery module 1055, a synchronization module 1056, and a network module 1057.

The network module 1007 of the host electronic device 1000 may form a session with the network module 1057 of the guest electronic device 1050. The synchronization module 1006 and the synchronization module 1056 may perform synchronization.

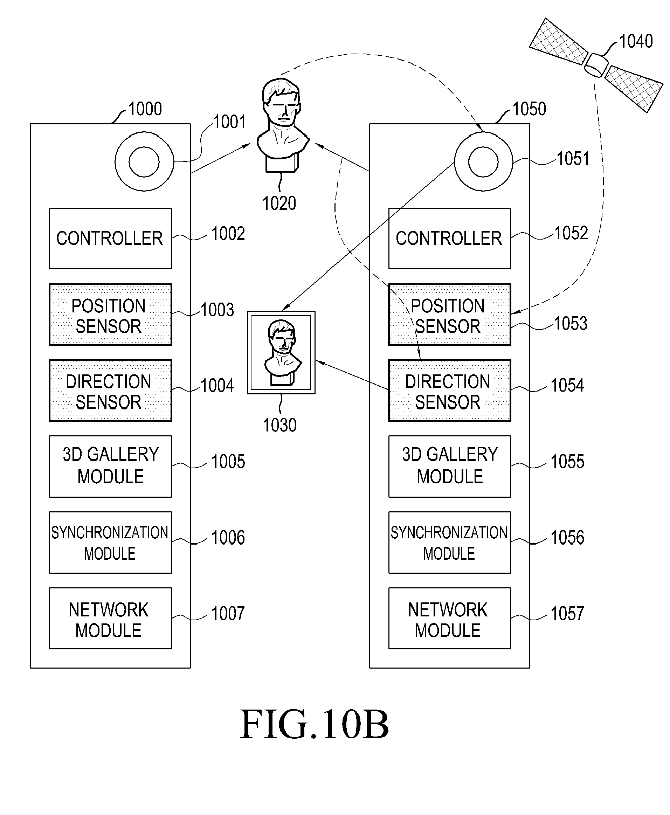

Meanwhile, in FIG. 10B, the camera module 1001 of the host electronic device 1000 and the camera module 1051 of the guest electronic device 1050 may photograph a subject 1020. The position sensor 1053 of the guest electronic device 1050 may receive a GPS coordinate from a GPS system 1040 and/or collect altitude information as photographing related information. Further, the position sensor 1053 may collect direction information from the direction sensor 1054 as the photographing related information. The guest electronic device 1050 may store a taken picture 1030 and also store the photographing related information as metadata of the taken picture 1030.

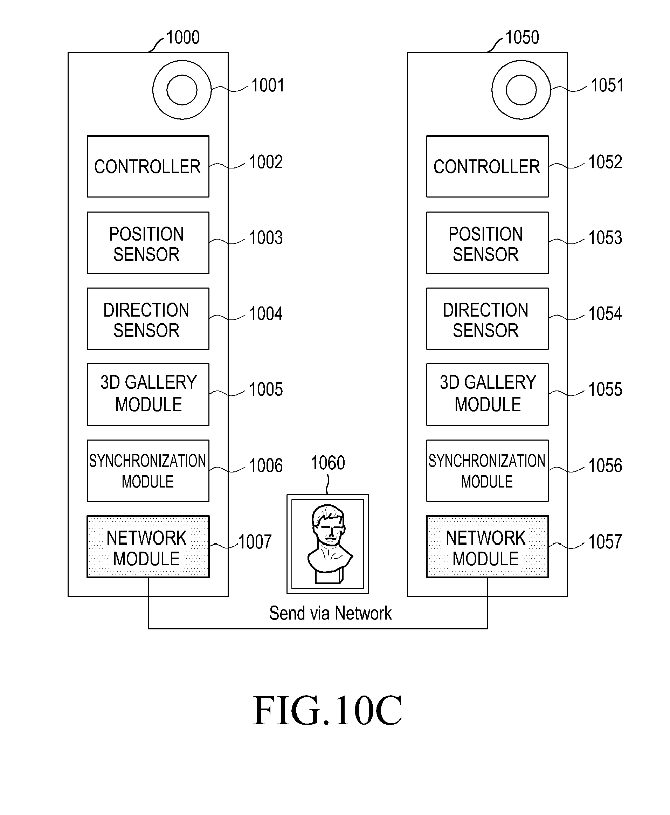

Referring to FIG. 10C, the network module 1057 of the guest electronic device 1050 may transmit together a taken picture and photographing related information 1060 to the network module 1007 of the host electronic device 1000.

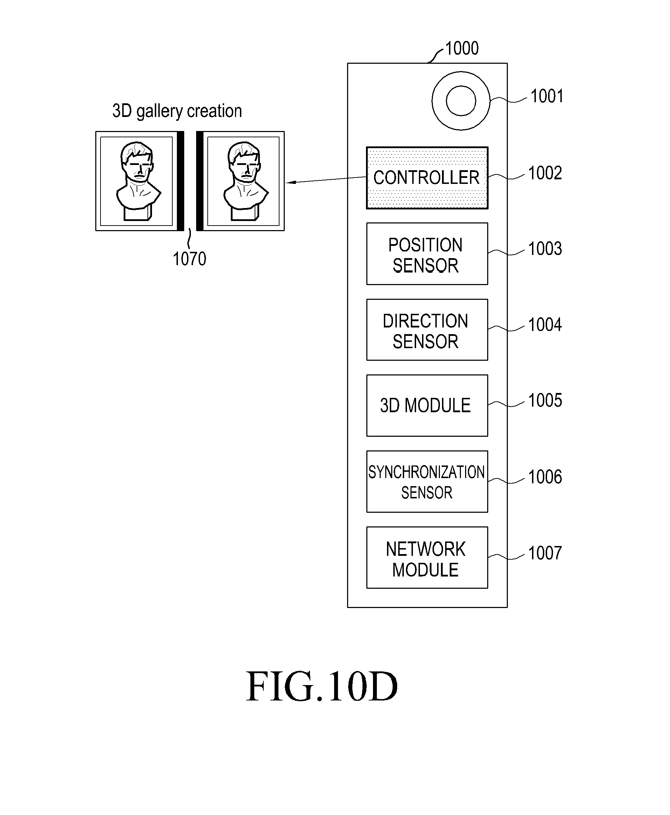

Referring to FIG. 10D, the controller 1002 may generate and display a three-dimensional gallery 1070.

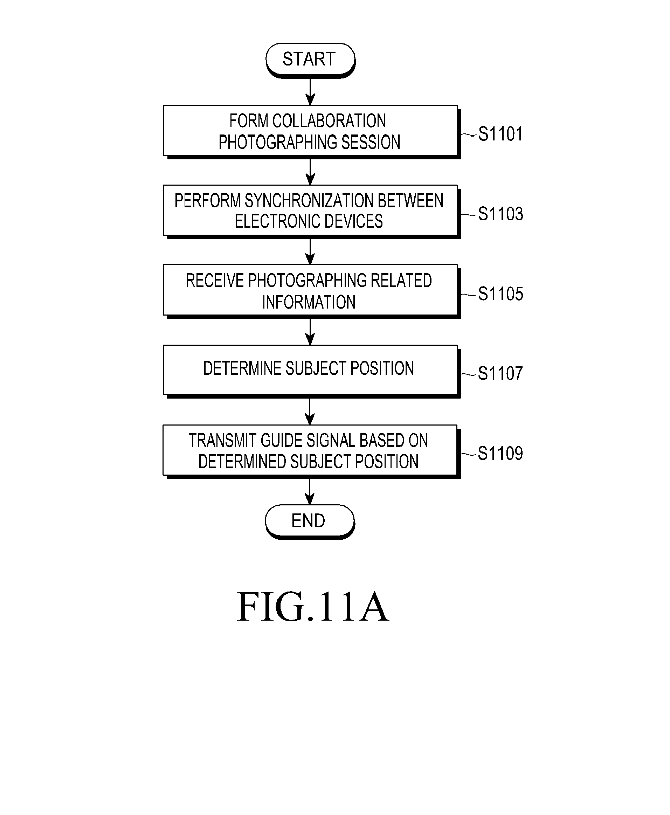

FIG. 11A is a flowchart describing a method of controlling a host electronic device according to another embodiment of the present disclosure.

The host electronic device may form a collaboration photographing session with the guest electronic device in operation S1101. Further, the host electronic device may perform synchronization with the guest electronic device in operation S1103.

The host electronic device may receive photographing related information from the guest electronic device in operation S1105 and determine a subject position based on the received photographing related information in operation S1107. The determination of the subject position may be described below in more detail.

Meanwhile, the host electronic device may transmit a guide signal based on the determined subject position to the guest electronic device in operation S1109. The guide signal may include movement information to allow the guest electronic device to accurately photograph the subject.

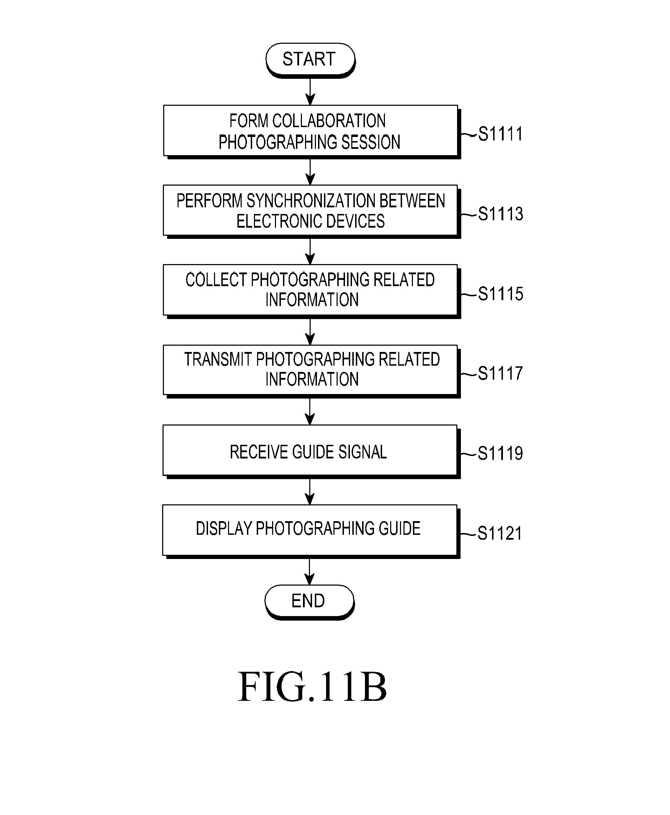

FIG. 11B is a flowchart describing a method of controlling a guest electronic device according to another embodiment of the present disclosure.

The guest electronic device may form a collaboration photographing session with the host electronic device in operation S1111. Further, the guest electronic device may perform synchronization with the host electronic device in operation S 1113.

The guest electronic device may collect photographing related information in operation S1115 and transmit the photographing related information in operation S1117. That is, the guest electronic device may collect the photographing related information and transmit the photographing related information to the host electronic device even before receiving the photographing command signal.

The guest electronic device may receive a guide signal from the host electronic device in operation S 1119 and display a photographing guide based on the guide signal in operation S1121. For example, the guest electronic device may display the photographing guide to move the guest electronic device in order to more accurately photograph the subject.

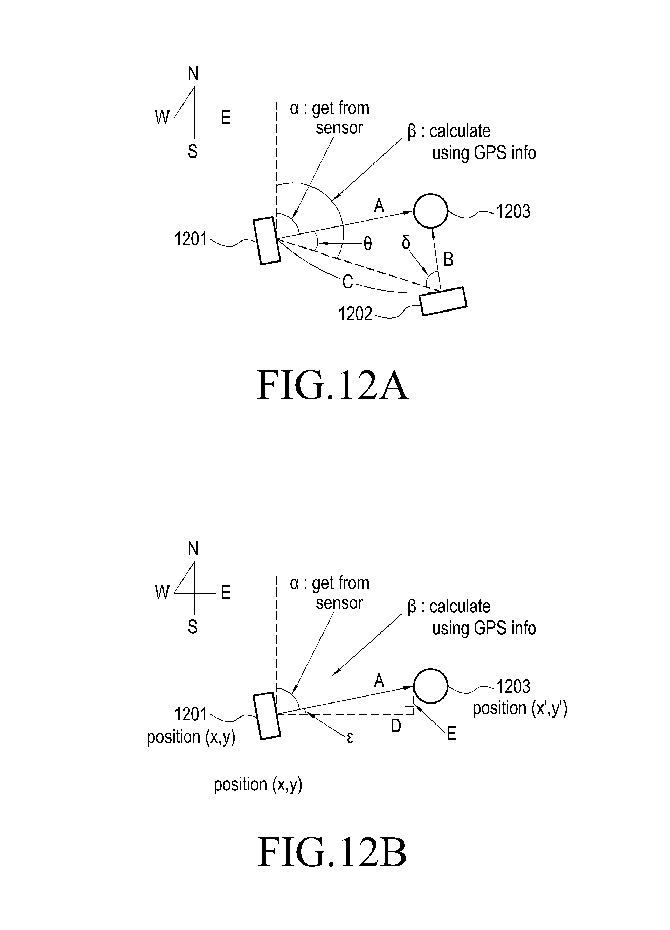

FIGS. 12A and 12B illustrate concepts describing a method of estimating a subject position according to an embodiment of the present disclosure.

As illustrated in FIG. 12A, a host electronic device 1201 and a guest electronic device 1202 may photograph a subject 1203. Meanwhile, the host electronic device 1201 may determine an arrangement position based on a GPS coordinate collected by a GPS module.

The guest electronic device 1202 may also determine an arrangement position based on a GPS coordinate collected by the GPS module. Meanwhile, the guest electronic device 1202 may transmit the GPS coordinate to the host electronic device 1201 as photographing related information. The host electronic device 1201 may determine an inclination $\alpha$ collected through the direction sensor. Further, the host electronic device 1201 may determine an angle $\beta$ between the host electronic device 1201 and the guest electronic device 1202 based on the GPS coordinate of the host electronic device 1201 and the GPS coordinate of the guest electronic device 1202.

The host electronic device 1201 may determine a first angle $\theta$ based on Equation (1) including the inclination $\alpha$ of the host electronic device 1201 and the angle $\beta$ between the host electronic device 1201 and the guest electronic device 1202.

$$\theta = \alpha - \beta \quad\text{.................... Equation (1)}$$

The host electronic device 1201 may determine a second angle $\delta$ based on the received photographing related information. For example, the host electronic device 1201 may determine the second angle δ based on the GPS coordinate of the guest electronic device 1202 and azimuth information.

Further, the host electronic device 1201 may determine a distance C between the host electronic device 1201 and the guest electronic device 1202 based on the GPS coordinate of the host electronic device 1201 and the GPS coordinate of the guest electronic device 1202.

The host electronic device 1201 may determine a distance A between the host electronic device 1201 and the subject 1203 based on Equation (2).

$$A = \frac{C \sin \delta}{\sin(180° - \theta - \delta)}$$ .................... Equation (2)

The host electronic device 1201 may determine a distance B between the guest electronic device 1202 and the subject 1203 based on Equation (3).

$$B = \frac{C \sin \theta}{\sin(180° - \theta - \delta)}$$ ....................... Equation (3)

Based on the above described process, the host electronic device 1201 may determine the distance A between the host electronic device 1201 and the subject 1203 and the distance B between the guest electronic device 1202 and the subject 1203.

In FIG. 12B, a process in which the host electronic device 1201 determines a coordinate (x', y') of the subject 1203 is described.

It is assumed in FIG. 12B that a coordinate of the host electronic device 1201 is (x, y). The host electronic device 1201 may determine a third angle ε based on Equation (4).

$$\varepsilon = 90° - \alpha$$ .......................... Equation (4)

The host electronic device 1201 may determine a first distance D and a second distance E respectively based on Equation (5) and Equation (6).

$$D = A \cos \varepsilon$$ ....................... Equation (5)

$$E = A \sin \varepsilon$$ ...................... Equation (6)

The host electronic device 1201 may determine an x-axis coordinate (x') and a y-axis coordinate (y') of the subject 1203 respectively based on Equation (7) and Equation (8).

$$x' = x + D$$ ....................... Equation (7)

$$y' = y + E$$ ....................... Equation (8)

According to the above description, the host electronic device 1201 may determine an estimated position of the subject 1203. The host electronic device 1201 may transmit a guide signal to the guest electronic device 1202 based on the estimated position of the subject 1203. The guide signal may include at least one of the estimated position of the subject 1203, information on the distance between the guest electronic device 1202 and the subject 1203, and guest electronic device movement induction information.

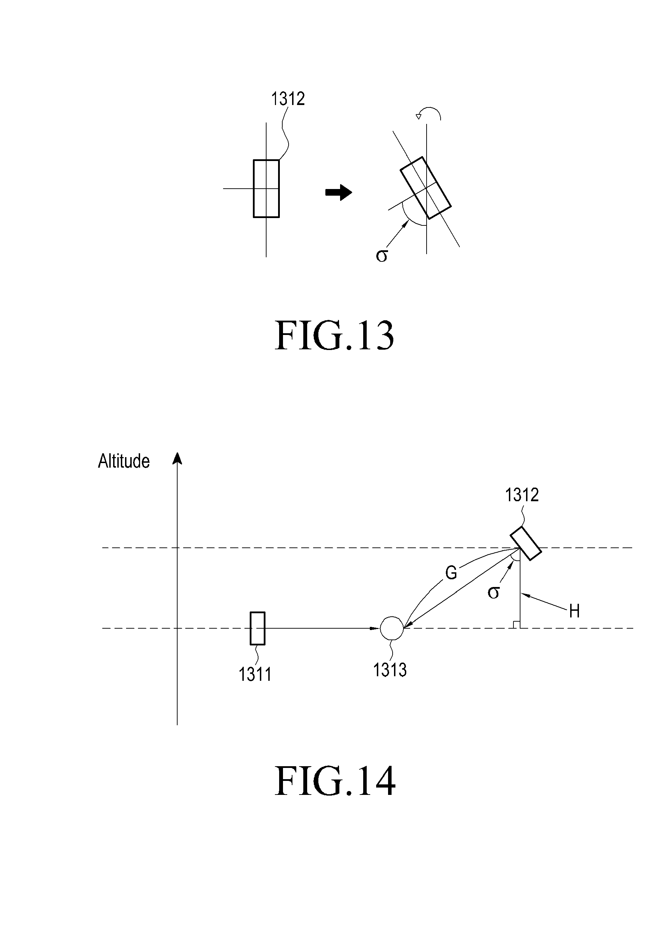

FIGS. 13 and 14 illustrate concepts describing a determination of a subject estimation position when altitudes of a host electronic device and a guest electronic device are different according to another embodiment of the present disclosure.

Referring to FIGS. 13 and 14, first, it is assumed that a guest electronic device 1312 is inclined by a fourth angle σ as illustrated in FIG. 13. Further, it is assumed that the guest electronic device 1312 is separated from the ground by a first height H as illustrated in FIG. 14. The guest electronic device 1312 may transmit information on the first height H and inclination, that is, information on the fourth angle σ, to a host electronic device 1311.

The host electronic device 1311 may determine a distance G between the guest electronic device 1312 and a subject 1313 through Equation (9) based on the first height H and the fourth angle σ.

$$G = \frac{H}{\cos\sigma}$$ ………………………. Equation (9)

The host electronic device 1311 may transmit the determined distance G between the guest electronic device 1312 and the subject 1313 to the guest electronic device 1312. The guest electronic device 1312 may display the received distance G between the guest electronic device 1312 and the subject 1313 as a photographing guide.

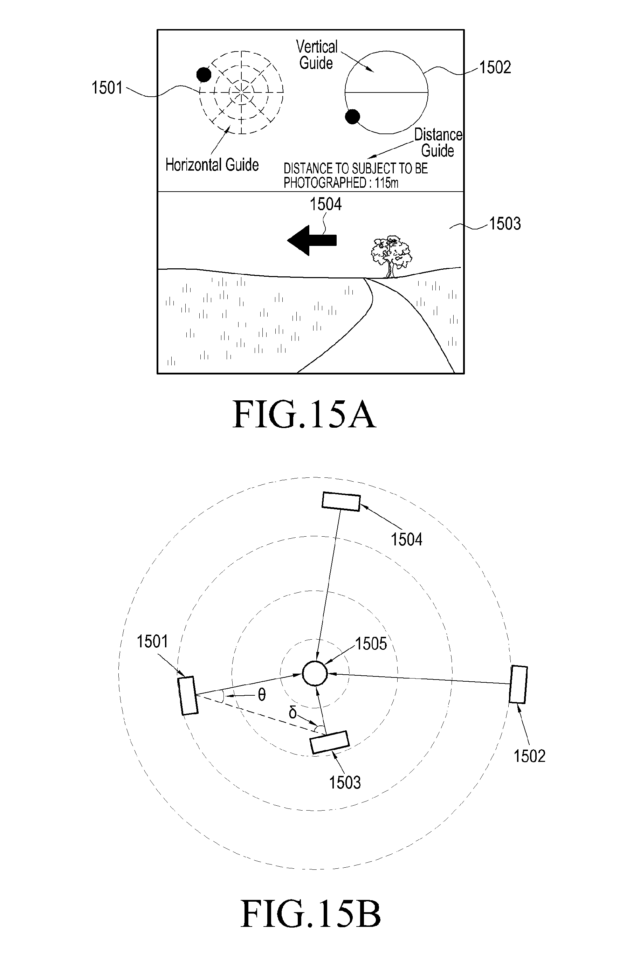

FIG. 15A illustrates a concept of a photographing guide according to an embodiment of the present disclosure.

Referring to FIG. 15A, the photographing guide of a guest electronic device may include at least one of a horizontal guide 1501, a vertical guide 1502, a photographed image 1503, and guest electronic device movement induction information 1504. Further, the photographing guide may include an estimated distance between the guest electronic device and a subject.

The horizontal guide 1501 may display a position where the guest electronic device is arranged on a plane with an estimated position of the subject as the origin.

The vertical guide 1502 may display the position where the guest electronic device is arranged in a vertical direction.

The photographed image 1503 may display an image collected by the guest electronic device, and the guest electronic device movement induction information 1504 may refer to information on a movement of the guest electronic device to more accurately photograph the subject and refers to a movement of the guest electronic device in a left direction in the embodiment of FIG. 15A.

FIG. 15B illustrates a detailed concept of the horizontal guide of FIG. 15A according to an embodiment of the present disclosure.

Referring to FIG. 15B, a center of the horizontal guide may be determined as an estimated position of a subject 1505. The horizontal guide may display at least one concentric circle with the estimated position of the subject 1505 as the origin. The horizontal guide may arrange and display a host electronic device 1501 and the at least one of electronic devices 1502 to 1504 on predetermined positions.

In Equations (8) and (9), the configuration of determining the estimated position of the subject 1505 has been described. When an estimated position coordinate of the subject 1505 is determined by Equations (8) and (9), the host electronic device 1501 may arrange and display the host electronic device 1501 and the at least one guest electronic devices 1502 to 1504 on predetermined positions based on a coordinate of each of the guest electronic devices 1502 to 1504 and the estimated position coordinate of the subject 1505.

Based on the above description, the host electronic device may transmit the guide signal to the guest electronic device. The guest electronic device may receive the guide signal and display the photographing guide.

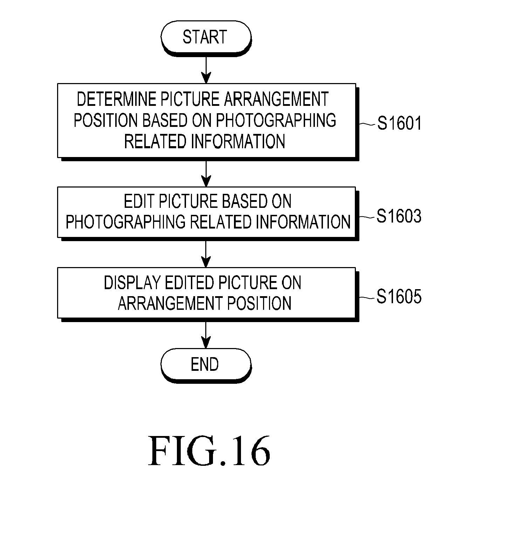

FIG. 16 is a flowchart describing a method of controlling a host electronic device according to an embodiment of the present disclosure.

Referring to FIG. 16, the host electronic device may receive photographing related information from the guest electronic devices and determine picture arrangement positions based on the received photographing related information in operation S1601.

The host electronic device may edit the pictures based on the photographing related information, before displaying the pictures on the arrangement positions, in operation S1603. For example, the host electronic device may zoom-in/out on the pictures. Alternatively, the host electronic device may edit the pictures to be inclined.

The host electronic device may display edited pictures on the arrangement positions in operation S1605.

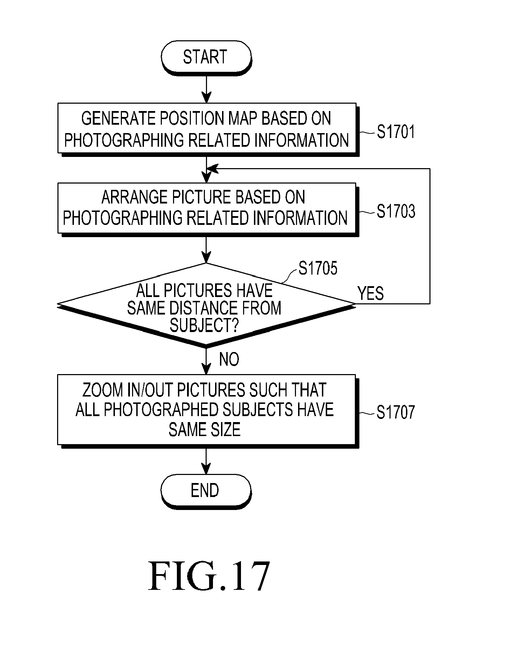

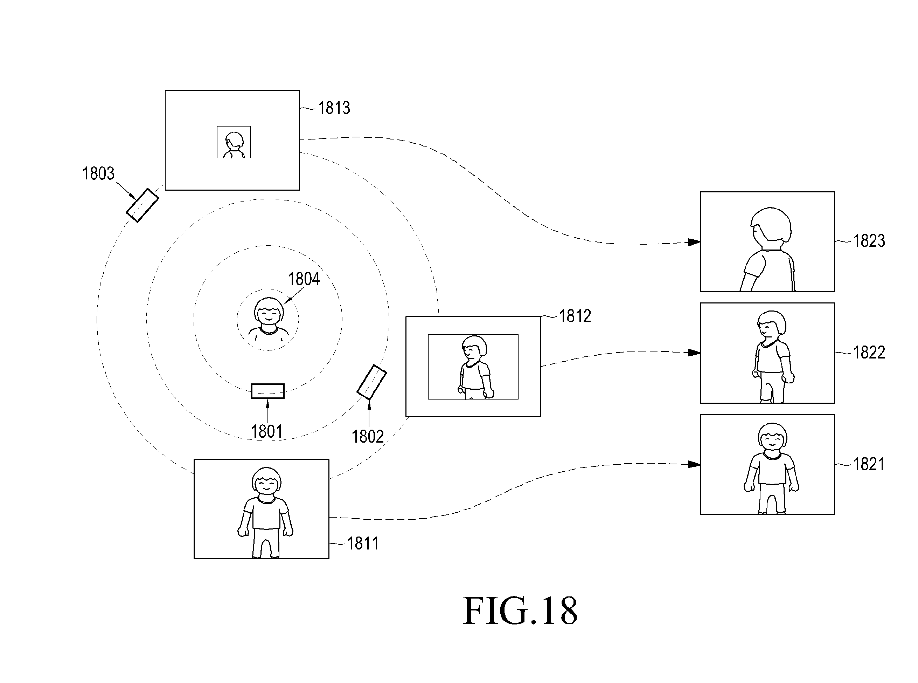

FIG. 17 is a flowchart describing a method of controlling a host electronic device according to another embodiment of the present disclosure, and FIG. 18 illustrates a concept of a position map according to an embodiment of the present disclosure.

Referring to FIG. 17, the host electronic device may generate a position map based on the photographing related information, received from the guest electronic devices, in operation S1701. The position map may be a map indicating a relative position relation between the host electronic device and the guest electronic devices, and may be, for example, as illustrated in FIG. 18.

Referring to FIG. 18, the host electronic device may set the position map with an estimated position of a subject 1804 as a center. Further, the host electronic device may determine a host electronic device position 1801, a first guest electronic device position 1802, and a second guest electronic device position 1803 based on the photographing related information.

Particularly, the host electronic device may determine a distance between the subject 1804 and the host electronic device position 1801, a distance between the subject 1804 and the first guest electronic device position 1802, and a distance between the subject 1804 and the second guest electronic device position 1803.

Meanwhile, in the embodiment of FIG. 18, it is noted that the distance between the subject 1804 and the host electronic device position 1801, the distance between the subject 1804 and the first guest electronic device position 1802, and the distance between the subject 1804 and the second guest electronic device position 1803 are different from each other.

Referring back to FIG. 17, the host electronic device may arrange the pictures received from the guest electronic devices based on the photographing related information in operation S1703. The host electronic device may determine whether all pictures are arranged to have the same distance from the subject in operation S1705.

When it is determined that not all pictures are arranged to have the same distance from the subject in operation S1705, the host electronic device may zoom-in/out on the pictures such that all photographed subjects have the same size in operation S1707. For example, referring to FIG. 18, it is noted that sizes of the subjects within taken pictures 1811 to 1813 are different from each other as the distance between the subject 1804 and the host electronic device position 1801, the distance between the subject 1804 and the first guest electronic device position 1802, and the distance between the subject 1804 and the second guest electronic device position 1803 are different from each other.

The host electronic device may store a second edited picture 1822 which has been zoomed-in from the second picture 1812 and a third edited picture 1823 which has been zoomed-in from the third picture 1813, while a first edited picture 1821 is not zoomed-in/out. That is, the host electronic device may zoom-in on the picture which has been taken at a position farther from the subject 1804 and store the zoomed-in picture, and zoom-out on the picture which has been taken at a position nearer from the subject 1804 and store the zoomed-out picture. Accordingly, the host electronic device may edit the pictures such that the sizes of the subjects within the stored pictures become the same.

It will be appreciated that the various embodiments of the present disclosure may be implemented in a form of hardware, software, or a combination of hardware and software. Any such software may be stored, for example, in a volatile or non-volatile storage device such as a ROM, a memory such as a RAM, a memory chip, a memory device, or a memory Integrated Circuit (IC), or a recordable optical or magnetic medium such as a Compact Disk (CD), a Digital Versatile Disk (DVD), a magnetic disk, or a magnetic tape, regardless of its ability to be erased or its ability to be re-recorded. A web widget manufacturing method of the present disclosure can be realized by a computer or a portable terminal including a controller and a memory, and it can be seen that the memory corresponds to an example of the storage medium which is suitable for storing a program or programs including instructions by which the various embodiments of the present disclosure are realized, and is machine readable. Accordingly, the present disclosure includes a program for a code implementing the apparatus and method described in the appended claims of the specification and a machine-readable storage medium for storing the program. Moreover, such a program as described above can be electronically transferred through an arbitrary medium such as a communication signal transferred through cable or wireless connection, and the present disclosure properly includes the things equivalent to that.

Further, the electronic device can receive the program from a program providing apparatus connected to the device wirelessly or through a wire and store the received program. The program supply apparatus may include a program that includes instructions to execute the various embodiments of the present disclosure, a memory that stores information or the like required for the various embodiments of the present disclosure, a communication unit that conducts wired or wireless communication with the electronic apparatus, and a control unit that transmits a corresponding program to a transmission and/or reception apparatus in response to the request from the electronic apparatus or automatically.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1. A method of controlling a host electronic device collaboratively photographing a subject with at least one guest electronic device, the method comprising:

   forming a session with the at least one guest electronic device;
   performing synchronization with the at least one guest electronic device through the formed session;
   transmitting a photographing command signal for enabling the at least one guest electronic device to photograph the subject to the at least one guest electronic device;
   photographing the subject; and
   receiving, from each of the at least one guest electronic device, a picture generated by photographing the subject in a different direction from a photographing direction of the host electronic device and photographing related information on a state of a respective one of the at least one guest electronic device at a photographing time point of each of the at least one guest electronic device.

2. The method of claim 1, wherein the forming of the session with the at least one guest electronic device comprises:

   generating a room for collaboratively photographing the subject;
   receiving a join request signal of the generated room from the at least one guest electronic device; and
   enlisting the at least one guest electronic device in the generated room.

3. The method of claim 1, wherein the performing of the synchronization with the at least one guest electronic device through the formed session comprises performing time synchronization with the at least one guest electronic device.

4. The method of claim 1, wherein the performing of the synchronization with the at least one guest electronic device through the formed session comprises displaying an image collected by a camera module.

5. The method of claim 1, further comprising displaying a three-dimensional gallery including another picture generated by photographing the subject and at least one of the picture of a respective one of the at least one guest electronic device,
   wherein the at least one of the picture is generated by photographing the subject in a different direction from a photographing direction of the host electronic device, and
   wherein the at least one of the picture is respectively received from each of the at least one guest electronic device.

6. The method of claim 1, wherein the photographing related information includes at least one of a Global Positioning Service (GPS coordinate), altitude information, direction information, and an inclination of the at least one guest electronic device.

7. The method of claim 1, further comprising estimating a position of the subject based on the photographing related information received from the at least one guest electronic device.

8. A host electronic device collaboratively photographing a subject with at least one guest electronic device, the host electronic device comprising:

   a network module configured to form a session with the at least one guest electronic device and transmit a photographing command signal for enabling the at least one guest electronic device to photograph the subject to the at least one guest electronic device;
   a synchronization module configured to perform synchronization with the at least one guest electronic device through the formed session; and
   a camera module configured to photograph the subject,
   wherein the network module is configured to receive, from each of the at least one guest electronic device, a picture generated by photographing the subject in a different direction from a photographing direction of the host electronic device and photographing related information on a state of a respective one of the at least one guest electronic device at a photographing time point of each of the at least one guest electronic device.

9. The host electronic device of claim 8, further comprising a controller configured to generate a room for collaboratively photographing the subject and to enlist the at least one guest electronic device in the generated room when receiving a join request signal of the generated room from the at least one guest electronic device.

**10.** The host electronic device of claim 8, wherein the synchronization module is configured to perform time synchronization with the at least one guest electronic device.

**11.** The host electronic device of claim 8, further comprising a touch screen configured to display an image collected by the camera module.

**12.** The host electronic device of claim 8, wherein the photographing related information includes at least one of a Global Positioning Service (GPS) coordinate, altitude information, direction information, and an inclination of the at least one guest electronic device.

**13.** The host electronic device of claim 8, further comprising a controller confgured to estimate a position of the subject based on the photographing related information received from the at least one guest electronic device.

TOUCH SCREEN —190

/100

TOUCH SCREEN
CONTROLLER —195

120— MOBILE COMMUNICATION
MODULE

CONTROLLER

111

CPU

POWER SUPPLIER —180

130— SUB COMMUNICATION
MODULE

131— WIRELESS LAN
MODULE

132— SHORT DISTANCE
COMMUNICATION
MODULE

112
—110

SENSOR MODULE —170

ROM

113

RAM

INPUT/OUTPUT MODULE —160

BUTTON —161

MICROPHONE —162

140— MULTIMEDIA MODULE

141— BROADCASTING
COMMUNICATION
MODULE

142— AUDIO REPRODUCTION
MODULE

143— VIDEO REPRODUCTION
MODULE

SPEAKER —163

VIBRATION MOTOR —164

CONNECTOR —165

KEYPAD —166

EARPHONE
CONNECTING JACK —167

150— CAMERA MODULE

151— FIRST CAMERA

152— SECOND CAMERA

STORAGE UNIT —175

155— GPS MODULE

# FIG.1

FIG.2

START

FORM COLLABORATION
PHOTOGRAPHING SESSION ─ S301

PERFORM SYNCHRONIZATION BETWEEN
ELECTRONIC DEVICES ─ S303

TRANSMIT PHOTOGRAPHING COMMAND
SIGNAL ─ S305

PHOTOGRAPH SUBJECT ─ S307

RECEIVE TAKEN PICTURE/
PHOTOGRAPHING RELATED INFORMATION ─ S309

END

# FIG.3A

```
                    ┌─────────┐
                    │  START  │
                    └────┬────┘
                         ▼
        ┌──────────────────────────────┐
        │     FORM COLLABORATION        │  ～S311
        │   PHOTOGRAPHING SESSION       │
        └──────────────┬───────────────┘
                       ▼
        ┌──────────────────────────────┐
        │ PERFORM SYNCHRONIZATION BETWEEN│  ～S313
        │      ELECTRONIC DEVICES        │
        └──────────────┬───────────────┘
                       ▼
        ┌──────────────────────────────┐
        │ TRANSMIT PHOTOGRAPHING COMMAND │  ～S315
        │            SIGNAL              │
        └──────────────┬───────────────┘
                       ▼
        ┌──────────────────────────────┐
        │      PHOTOGRAPH SUBJECT        │  ～S317
        └──────────────┬───────────────┘
                       ▼
        ┌──────────────────────────────┐
        │  COLLECT PHOTOGRAPHING RELATED │  ～S319
        │          INFORMATION           │
        └──────────────┬───────────────┘
                       ▼
        ┌──────────────────────────────┐
        │    TRANSMIT TAKEN PICTURE/     │  ～S321
        │ PHOTOGRAPHING RELATED INFORMATION│
        └──────────────┬───────────────┘
                       ▼
                  ┌─────────┐
                  │   END   │
                  └─────────┘
```

# FIG.3B

START

GENERATE ROOM FOR COLLABORATION PHOTOGRAPHING — S401

ADVERTISE GENERATED ROOM — S403

RECEIVE JOIN REQUEST SIGNAL OF GENERATED ROOM — S405

ENLIST ELECTRONIC DEVICE HAVING TRANSMITTED JOIN REQUEST SIGNAL IN GENERATED ROOM — S407

FORM SESSION WITH JOINED ELECTRONIC DEVICE — S409

END

# FIG.4

190  100

510

| GENERATE COLLABORATION PHOTOGRAPHING ROOM? | 511 |
| PARTICIPATE IN COLLABORATION PHOTOGRAPHING ROOM? | 512 |

## FIG.5A

190  100

520

| ROOM NAME | ABC | 521 |
| PW | **7 | 522 |

## FIG.5B

530

| SUBSCRIBER |
|---|
| AB |
| CD |
| EF |

## FIG.5C

540

| ROOM LIST | |
|---|---|
| ABC | 2 |
| EFG | 4 |

## FIG.5D

FIG.6

FIG.7

START

FORM COLLABORATION
PHOTOGRAPHING SESSION — S801

DISPLAY PICTURE — S803

S805
INPUT DIRECTION CHANGE
COMMAND? — NO

YES

DISPLAY PICTURE IN ACCORDANCE WITH
CHANGED DIRECTION — S807

END

FIG.8

FIG.9A

FIG.9B

FIG.9C

FIG.9D

1000

1001

CONTROLLER — 1002

POSITION SENSOR — 1003

DIRECTION SENSOR — 1004

3D GALLERY MODULE — 1005

SYNCHRONIZATION MODULE — 1006

NETWORK MODULE — 1007

1050

1051

CONTROLLER — 1052

POSITION SENSOR — 1053

DIRECTION SENSOR — 1054

3D GALLERY MODULE — 1055

SYNCHRONIZATION MODULE — 1056

NETWORK MODULE — 1057

Sync via Network

# FIG.10A

FIG.10B

1000 ~ 1001

CONTROLLER ~ 1002

POSITION SENSOR ~ 1003

DIRECTION SENSOR ~ 1004

3D GALLERY MODULE ~ 1005

SYNCHRONIZATION MODULE ~ 1006

NETWORK MODULE ~ 1007

1060

1050 ~ 1051

CONTROLLER ~ 1052

POSITION SENSOR ~ 1053

DIRECTION SENSOR ~ 1054

3D GALLERY MODULE ~ 1055

SYNCHRONIZATION MODULE ~ 1056

NETWORK MODULE ~ 1057

Send via Network

# FIG.10C

1000

3D gallery creation

1070

1001

CONTROLLER — 1002

POSITION SENSOR — 1003

DIRECTION SENSOR — 1004

3D MODULE — 1005

SYNCHRONIZATION SENSOR — 1006

NETWORK MODULE — 1007

# FIG.10D

START

FORM COLLABORATION
PHOTOGRAPHING SESSION — S1101

PERFORM SYNCHRONIZATION BETWEEN
ELECTRONIC DEVICES — S1103

RECEIVE PHOTOGRAPHING RELATED
INFORMATION — S1105

DETERMINE SUBJECT POSITION — S1107

TRANSMIT GUIDE SIGNAL BASED ON
DETERMINED SUBJECT POSITION — S1109

END

# FIG.11A

START

FORM COLLABORATION
PHOTOGRAPHING SESSION — S1111

PERFORM SYNCHRONIZATION BETWEEN
ELECTRONIC DEVICES — S1113

COLLECT PHOTOGRAPHING RELATED
INFORMATION — S1115

TRANSMIT PHOTOGRAPHING RELATED
INFORMATION — S1117

RECEIVE GUIDE SIGNAL — S1119

DISPLAY PHOTOGRAPHING GUIDE — S1121

END

# FIG.11B

FIG.12A

FIG.12B

1312

σ

# FIG.13

Altitude

1312

G

σ

H

1311

1313

# FIG.14

FIG.15A

FIG.15B

START

DETERMINE PICTURE ARRANGEMENT
POSITION BASED ON PHOTOGRAPHING
RELATED INFORMATION — S1601

EDIT PICTURE BASED ON
PHOTOGRAPHING RELATED INFORMATION — S1603

DISPLAY EDITED PICTURE ON
ARRANGEMENT POSITION — S1605

END

FIG.16

START

GENERATE POSITION MAP BASED ON
PHOTOGRAPHING RELATED INFORMATION — S1701

ARRANGE PICTURE BASED ON
PHOTOGRAPHING RELATED INFORMATION — S1703

S1705

ALL PICTURES HAVE
SAME DISTANCE FROM
SUBJECT?          YES

NO

ZOOM IN/OUT PICTURES SUCH THAT
ALL PHOTOGRAPHED SUBJECTS HAVE
SAME SIZE — S1707

END

FIG.17

FIG.18

Europäisches
Patentamt

European
Patent Office

Office européen
des brevets

## EUROPEAN SEARCH REPORT

Application Number

EP 14 17 0485

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/109726 A1 (HWANG CHAN SOO [KR] ET AL) 12 May 2011 (2011-05-12) <br> * abstract * <br> * figures 1,2 * | 1-8 | INV. <br> H04N1/00 |
| X | EP 2 309 762 A1 (EUROCONSULT NUEVAS TECNOLOGIAS S A [ES]; UNIV ALCALA HENARES [ES]; SAF) 13 April 2011 (2011-04-13) <br> * abstract * <br> * paragraphs [0008], [0015] * <br> * figure 1 * <br> * paragraph [0008] * <br> * paragraph [0011] * <br> * paragraph [0015] * <br> * claim 1 * | 1-13 | |
| A | WO 2008/075635 A1 (MATSUSHITA ELECTRIC IND CO LTD [JP]; KOGANE HARUO) 26 June 2008 (2008-06-26) <br> * abstract * | 1-13 | |
| A | JP 2007 124378 A (FUJIFILM CORP) 17 May 2007 (2007-05-17) <br> * abstract * | 1-13 | TECHNICAL FIELDS SEARCHED (IPC) <br> H04N |
| A | US 7 102 686 B1 (ORIMOTO MASAAKI [JP] ET AL) 5 September 2006 (2006-09-05) <br> * abstract * | 1-13 | |

The present search report has been drawn up for all claims

| Place of search | Date of completion of the search | Examiner |
|---|---|---|
| The Hague | 10 December 2014 | Stoffers, Christian |

EPO FORM 1503 03.82 (P04C01)

## ANNEX TO THE EUROPEAN SEARCH REPORT
## ON EUROPEAN PATENT APPLICATION NO.

EP 14 17 0485

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2014

| Patent document cited in search report | | Publication date | Patent family member(s) | | Publication date |
|---|---|---|---|---|---|
| US 2011109726 | A1 | 12-05-2011 | KR 20110050843 A<br>US 2011109726 A1<br>US 2013329016 A1 | | 17-05-2011<br>12-05-2011<br>12-12-2013 |
| EP 2309762 | A1 | 13-04-2011 | CA 2727640 A1<br>EP 2309762 A1<br>ES 2354786 A1<br>US 2011141242 A1<br>WO 2009150272 A1 | | 17-12-2009<br>13-04-2011<br>17-03-2011<br>16-06-2011<br>17-12-2009 |
| WO 2008075635 | A1 | 26-06-2008 | JP 2008154073 A<br>WO 2008075635 A1 | | 03-07-2008<br>26-06-2008 |
| JP 2007124378 | A | 17-05-2007 | NONE | | |
| US 7102686 | B1 | 05-09-2006 | JP H11355624 A<br>US 7102686 B1<br>US 2006268159 A1 | | 24-12-1999<br>05-09-2006<br>30-11-2006 |

EPO FORM P0459

For more details about this annex : see Official Journal of the European Patent Office, No. 12/82